# EUROPEAN PATENT SPECIFICATION

(11) **EP 4 478 643 B1**
(45) Date of publication and mention of the grant of the patent: **09.09.2026**
(21) Application number: 23753176.9
(22) Date of filing: 09.02.2023
(51) Int. Cl.: H04L 5/00, H04L 1/08, H04W 72/23, H04L 5/14, H04W 72/1268, H04W 8/24

(54) **METHOD AND APPARATUS FOR PERFORMING UPLINK TRANSMISSION AND RECEPTION IN WIRELESS COMMUNICATION SYSTEM**
VERFAHREN UND VORRICHTUNG ZUR DURCHFÜHRUNG VON UPLINK-ÜBERTRAGUNG UND -EMPFANG IN EINEM DRAHTLOSKOMMUNIKATIONSSYSTEM
PROCÉDÉ ET APPAREIL PERMETTANT D'EFFECTUER UNE TRANSMISSION ET UNE RÉCEPTION EN LIAISON MONTANTE DANS UN SYSTÈME DE COMMUNICATION SANS FIL

(30) Priority: 09.02.2022 KR 20220017101; 09.08.2022 KR 20220099223; 26.09.2022 KR 20220121990
(43) Date of publication of application: 18.12.2024
(73) Proprietor: LG Electronics Inc., Yeongdeungpo-gu Seoul 07336 (KR)
(72) Inventor: KIM, Hyungtae, Seoul 06772 (KR); KANG, Jiwon, Seoul 06772 (KR)
(74) Representative: Mooser, Sebastian Thomas
(86) International application number: PCT/KR2023/001907
(87) International publication number: WO 2023/153828

(56) References cited:
- WO-A1-2018/203728
- WO-A1-2021/159522
- WO-A1-2021/162496
- WO-A1-2022/005109
- KR-A- 20180 057 485
- KR-A- 20210 042 353
- US-A1- 2021 184 812
- US-A1- 2022 393 823

## Description

### [Technical Field]

The present disclosure relates to a wireless communication system, and more specifically, to a method, a user equipment and a base station for performing uplink transmission and reception in a wireless communication system.

### [Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

Prior art is found in WO 2021/159522 A1, which generally relates to a data transmission method, device, and chip, and a readable storage medium, and in US 2021/184812 A1, which generally relates to beam management and convergence enhancements for semi-persistent and configured grant transmissions.

### [Disclosure]

### [Technical Problem]

The technical problem of the present disclosure is to provide a method and device for performing uplink transmission and reception in a wireless communication system.

Additionally, an additional technical problem of the present disclosure is to provide a method and device that supports a dynamic switching between STxMP (synchronization transmission across multi-panels) transmission method based on the SRS resource set indicator field and a dynamic switching between STxMP transmission method and M-TRP PUSCH transmission scheme.

The technical objects to be achieved by the present disclosure are not limited to the above-described technical objects, and other technical objects which are not described herein will be clearly understood by those skilled in the pertinent art from the following description.

### [Technical Solution]

The invention is set out in the independent claims. Preferred embodiments of the invention are set out in the dependent claims.

According to one embodiment of the present disclosure, a method includes receiving, by a user equipment, UE, from a base station, configuration information related to a plurality of sounding reference signal, SRS, resource sets, the plurality of SRS resource sets including a first SRS resource set and a second resource set; receiving, by the UE from the base station, downlink control information, DCI, including an SRS resource set indicator field indicating uplink simultaneous transmission or uplink repeated transmission based on the plurality of SRS resource sets; and based on the SRS resource set indicator field, performing, by the UE, the uplink repeated transmission or the uplink simultaneous transmission, wherein based on the uplink simultaneous transmission being indicated by the SRS resource set indicator field and a second type of uplink simultaneous transmission being indicated by first information: each of first uplink transmission and second uplink transmission based on the first SRS resource set is mapped to a plurality of transmission occasions, TOs, and each of the first uplink transmission and the second uplink transmission based on the second SRS resource set is mapped to the plurality of TOs, wherein based on the uplink repeated transmission being indicated by the SRS resource set indicator field: third uplink transmission based on the first SRS resource set is performed in a first TO among the plurality of TOs, and fourth uplink transmission based on the second SRS resource set is performed in a second TO among the plurality of TOs.

According to another embodiment of the present disclosure, a method specified above is performed by a user equipment UE, and a base station.

### [Technical Effects]

According to an embodiment of the present disclosure, a method and device for performing uplink transmission and reception in a wireless communication system may be provided.

According to an embodiment of the present disclosure, a method and apparatus supporting a dynamic switching between STxMP transmission method based on the SRS resource set indicator field and a dynamic switching between STxMP transmission method and M-TRP PUSCH transmission method may be provided.

The technical objects to be achieved by the present disclosure are not limited to the above-described technical objects, and other technical objects which are not described herein will be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a multiple TRP transmission scheme in a wireless communication system to which the present disclosure may be applied.
FIG. 8 is a diagram for describing an uplink transmission operation of a terminal in a wireless communication system to which the present disclosure may be applied.
FIG. 9 is a diagram for describing an uplink reception operation of a base station in a wireless communication system to which the present disclosure may be applied.
FIG. 10 is a diagram for describing the signaling procedure of the network side and the terminal according to an embodiment of the present disclosure.
FIG. 11 illustrates a block diagram of a wireless communication device according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.
- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

### Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

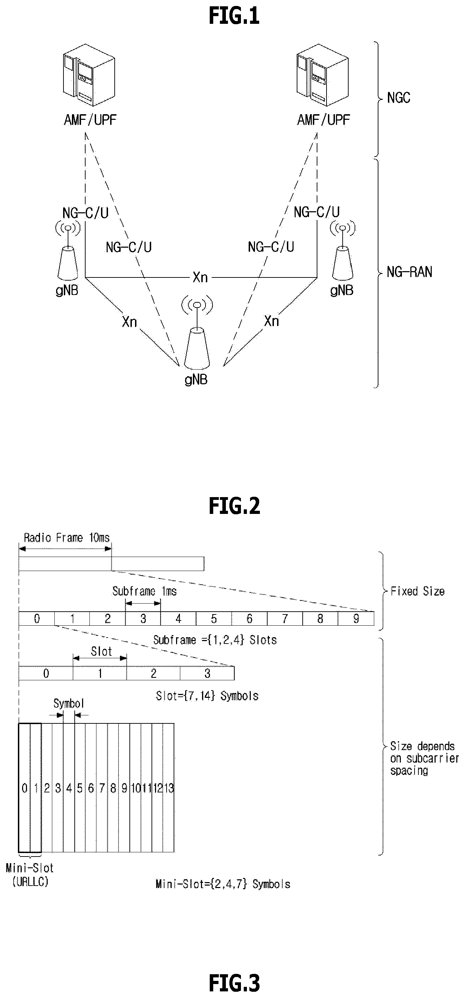

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, µ). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

**[Table 1]**

| µ | Δf=2^{µ}·15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of T_{c}=1/(Δfₘₐₓ·N_{f}). Here, Δfₘₐₓ is 480·10³ Hz and N_{f} is 4096. Downlink and uplink transmission is configured (organized) with a radio frame having a duration of T_{f}=1/(ΔfₘₐₓN_{f}/100)·T_{c}=10ms. Here, a radio frame is configured with 10 subframes having a duration of T_{sf}=(ΔfₘₐₓN_{f}/1000)·T_{c}=1ms, respectively.

In this case, there may be one set of frames for an uplink and one set of frames for a downlink. In addition, transmission in an uplink frame No. i from a terminal should start earlier by T_{TA}=(N_{TA}+N_{TA,offset})T_{c} than a corresponding downlink frame in a corresponding terminal starts. For a subcarrier spacing configuration µ, slots are numbered in an increasing order of nₛ^{µ}∈{0,..., Nₛₗₒₜ^{subframe,µ}-1} in a subframe and are numbered in an increasing order of n_{s,f}^{µ}∈{0,..., Nₛₗₒₜ^{frame,µ}-1} in a radio frame.

One slot is configured with N_{symb}^{slot} consecutive OFDM symbols and N_{symb}^{slot} is determined according to CP. A start of a slot nₛ^{µ} in a subframe is temporally arranged with a start of an OFDM symbol nₛ^{µ}N_{symb}^{slot} in the same subframe. All terminals may not perform transmission and reception at the same time, which means that all OFDM symbols of a downlink slot or an uplink slot may not be used. Table 3 represents the number of OFDM symbols per slot (N_{symb}^{slot}), the number of slots per radio frame (Nₛₗₒₜ^{frame,µ}) and the number of slots per subframe (Nₛₗₒₜ^{subframe,µ}) in a normal CP and Table 4 represents the number of OFDM symbols per slot, the number of slots per radio frame and the number of slots per subframe in an extended CP.

**[Table 3]**

| µ | N_{symb}^{slot} | Nₛₗₒₜ^{frame,µ} | Nₛₗₒₜ^{subframe,µ} |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

**[Table 4]**

| µ | N_{symb}^{slot} | Nₛₗₒₜ^{frame,µ} | Nₛₗₒₜ^{subframe,µ} |
|---|---|---|---|
| 2 | 12 | 40 | 4 |

FIG. 2 is an example on µ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

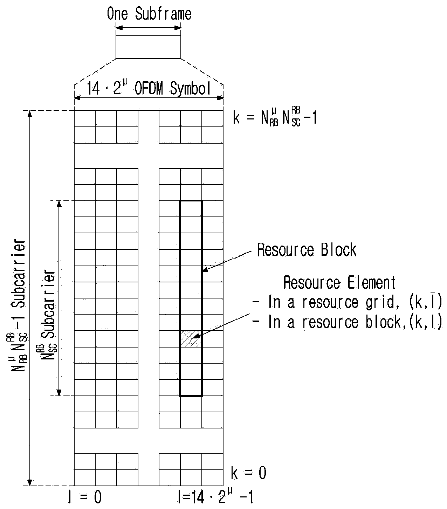

FIG. 3 illustrates a resource grid in a wireless communication system to which the present disclosure may be applied. In reference to FIG. 3, it is illustratively described that a resource grid is configured with N_{RB}^{µ}N_{sc}^{RB} subcarriers in a frequency domain and one subframe is configured with 14·2^{µ} OFDM symbols, but it is not limited thereto. In an NR system, a transmitted signal is described by OFDM symbols of 2^{µ}N_{symb}^{(µ)} and one or more resource grids configured with N_{RB}^{µ}N_{sc}^{RB} subcarriers. Here, N_{RB}^{µ}≤N_{RB}^{max,µ}. The N_{RB}^{max,µ} represents a maximum transmission bandwidth, which may be different between an uplink and a downlink as well as between numerologies.

In this case, one resource grid may be configured per µ and antenna port p. Each element of a resource grid for µ and an antenna port p is referred to as a resource element and is uniquely identified by an index pair (k,l'). Here, k=0,...,N_{RB}^{µ}N_{sc}^{RB}-1 is an index in a frequency domain and l'=0,...,2^{µ}N_{symb}^{(µ)}-1 refers to a position of a symbol in a subframe. When referring to a resource element in a slot, an index pair (k,l) is used. Here, l=0,...,N_{symb}^{µ}-1. A resource element (k,l') for µ and an antenna port p corresponds to a complex value, a_{k,l'}^{(p,µ)}. When there is no risk of confusion or when a specific antenna port or numerology is not specified, indexes p and µ may be dropped, whereupon a complex value may be a_{k,l'}^{(p)} or a_{k,l'}. In addition, a resource block (RB) is defined as N_{sc}^{RB}=12 consecutive subcarriers in a frequency domain. Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number). Common resource blocks are numbered from 0 to the top in a frequency domain for a subcarrier spacing configuration µ. The center of subcarrier 0 of common resource block 0 for a subcarrier spacing configuration µ is identical to 'point A'. A relationship between a common resource block number n_{CRB}^{µ} and a resource element (k,l) for a subcarrier spacing configuration µ in a frequency domain is given as in the following Equation 1. ${n}_{CRB}^{μ} = \left⌊\frac{k}{{N}_{sc}^{RB}}\right⌋$

In Equation 1, k is defined relatively to point A so that k=0 corresponds to a subcarrier centering in point A. Physical resource blocks are numbered from 0 to N_{BWP,i}^{size,µ}-1 in a bandwidth part (BWP) and i is a number of a BWP. A relationship between a physical resource block n_{PRB} and a common resource block n_{CRB} in BWP i is given by the following Equation 2. ${n}_{CRB}^{μ} = {n}_{PRB}^{μ} + {N}_{BWP , i}^{start , μ}$

N_{BWP,i}^{start,µ} is a common resource block that a BWP starts relatively to common resource block 0.

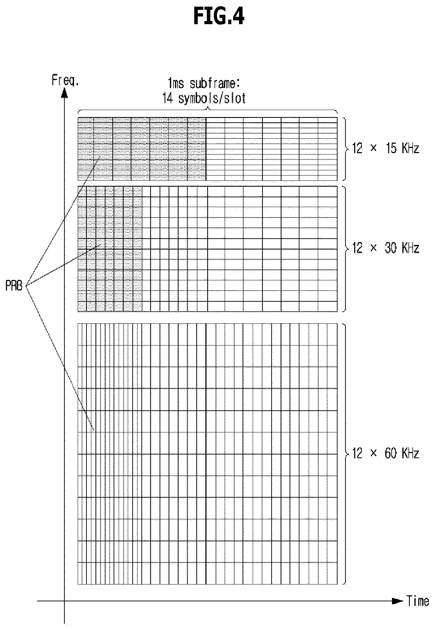

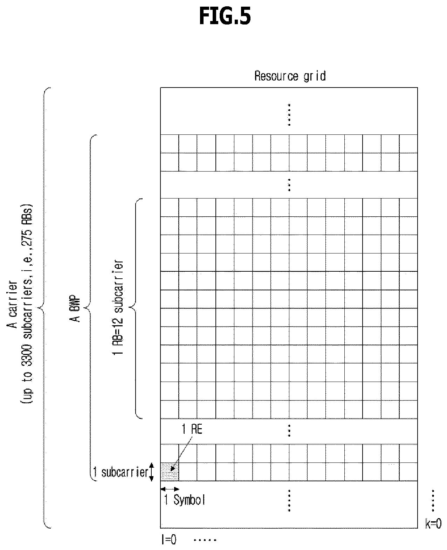

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.).

In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

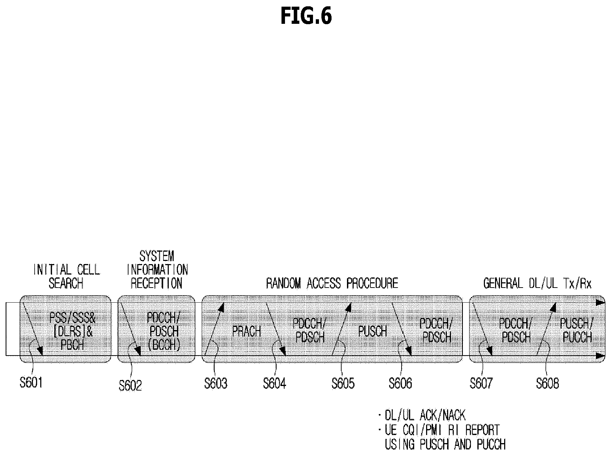

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

**[Table 5]**

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

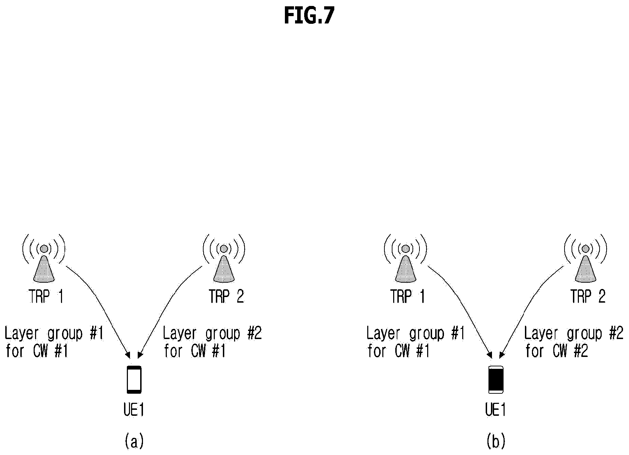

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 7(b), it may have a disadvantage that a code rate corresponding to a TB is higher compared to FIG. 7(a). However, it has an advantage that it may adjust a code rate by indicating a different RV (redundancy version) value or may adjust a modulation order of each CW for encoded bits generated from the same TB according to a channel environment.

According to the method illustrated in FIGS. 7 (a) and 7 (b) above, as the same TB is repeatedly transmitted through different layer groups and each layer group is transmitted by different TRP/panel, the data reception probability of the UE may be increased. This is referred to as a Spatial Division Multiplexing (SDM)-based M-TRP URLLC transmission scheme. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Regarding a method for multiple TRPs based URLLC scheduled by single DCI, the following methods are discussed.
1) Method 1 (SDM): Time and frequency resource allocation is overlapped and n (n<=Ns) TCI states in a single slot
   1-a) Method 1a.
      - The same TB is transmitted in one layer or layer set at each transmission time (occasion) and each layer or each layer set is associated with one TCI and one set of DMRS port(s).
      - A single codeword having one RV is used in all spatial layers or all layer sets. With regard to UE, different coded bits are mapped to a different layer or layer set by using the same mapping rule
   1-b) Method 1b
      - The same TB is transmitted in one layer or layer set at each transmission time (occasion) and each layer or each layer set is associated with one TCI and one set of DMRS port(s).
      - A single codeword having one RV is used in each spatial layer or each layer set. RV(s) corresponding to each spatial layer or each layer set may be the same or different.
   1-c) Method 1c

The same TB having one DMRS port associated with multiple TCI state indexes is transmitted in one layer at one transmission time (occasion) or the same TB having multiple DMRS ports one-to-one associated with multiple TCI state indexes is transmitted in one layer.

In case of the above-described method 1a and 1c, the same MCS is applied to all layers or all layer sets.

2) Method 2 (FDM): Frequency resource allocation is not overlapped and n (n<=Nf) TCI states in a single slot
- Each non-overlapping frequency resource allocation is associated with one TCI state.

The same single/multiple DMRS port(s) are associated with all non-overlapping frequency resource allocation.

2-a) Method 2a
- A single codeword having one RV is used for all resource allocation. With regard to UE, common RB matching (mapping of a codeword to a layer) is applied to all resource allocation.

2-b) Method 2b
- A single codeword having one RV is used for each non-overlapping frequency resource allocation. A RV corresponding to each non-overlapping frequency resource allocation may be the same or different.

For the above-described method 2a, the same MCS is applied to all non-overlapping frequency resource allocation.

3) Method 3 (TDM): Time resource allocation is not overlapped and n (n<=Nt1) TCI states in a single slot
- Each transmission time (occasion) of a TB has time granularity of a mini-slot and has one TCI and one RV.
- A common MCS is used with a single or multiple DMRS port(s) at all transmission time (occasion) in a slot.
- A RV/TCI may be the same or different at a different transmission time (occasion).

4) Method 4 (TDM): n (n<=Nt2) TCI states in K (n<=K) different slots
- Each transmission time (occasion) of a TB has one TCI and one RV.
- All transmission time (occasion) across K slots uses a common MCS with a single or multiple DMRS port(s).
- A RV/TCI may be the same or different at a different transmission time (occasion).

### Multiple TRP (M-TRP) URLLC transmission operation

The DL MTRP-URLLC transmission method refers to a method in which M-TRP transmits the same data/DCI using different layer (or space)/time/frequency resources. For example, TRP 1 may transmit the same data/DCI on resource 1 and TRP 2 may transmit the same data/DCI on resource 2.

A UE configured with the DL MTRP-URLLC transmission method may receive the same data/DCI using different layer (or space)/time/frequency resources. Here, information about the QCL RS/type (i.e., DL TCI state) to be used in the layer (or space)/time/frequency resource receiving the same data/DCI may be indicated/set from the base station to the UE.

For example, when the same data/DCI is received from resource 1 and resource 2, the DL TCI state used by resource 1 and the DL TCI state used by resource 2 may be indicated to the terminal. Since the UE receives the same data/DCI through Resource 1 and Resource 2, high reliability can be achieved. This DL MTRP URLLC method can be applied to PDSCH/PDCCH.

The UL MTRP-URLLC method refers to a method in which M-TRP receives the same data/UCI from one UE using different layer (or space)/time/frequency resources.

For example, TRP 1 may receive the same data/UCI from the UE on resource 1, and TRP 2 receives the same data/UCI from the terminal on resource 2, and then the received data/UCI may be shared through the backhaul link connected between TRPs.

A UE configured with the UL MTRP-URLLC transmission method may transmit the same data/UCI using different layer (or space)/time/frequency resources. Here, the Tx beam and Tx power (i.e., UL TCI state) to be used in the layer (or space)/time/frequency resource transmitting the same data/UCI may be indicated/configured from the base station to the UE.

For example, when the same data/UCI is transmitted on resource 1 and resource 2, the UL TCI state used in resource 1 and the UL TCI state used in resource 2 may be indicated to the UE. This UL MTRP URLLC method may be applied to PUSCH/PUCCH.

From a DCI transmission perspective, M-TRP transmission methods can be divided into i) M-DCI (multiple DCI)-based M-TRP transmission method in which each TRP transmits a different DCI and ii) S-DCI-based M-TRP transmission method in which one TRP transmits DCI.

For example, in the case of an S-DCI-based transmission method, since all scheduling information about data transmitted by the M-TRP is transmitted through one DCI, the S-DCI-based transmission method can be applied in an ideal BH (BackHaul) environment where dynamic cooperation between two TRPs is possible.

### S-DCI based M-TRP PDSCH transmission method

One of the SDM/FDM/TDM methods may be used for the S-DCI-based M-TRP PDSCH transmission method.

When the SDM method is applied, one TB is transmitted in multi-layers, and layers belonging to different DMRS CDM groups may be transmitted based on different Tx beams (i.e., QCL RS or/and TCI state). Accordingly, as the number of layers increases compared to the S-TRP transmission method, transmission capacity can be improved.

Additionally, when one TB is transmitted in multiple layers, some layers are transmitted with TRP 1 and the remaining layers are transmitted with TRP 2, so that channel reliability can be improved due to diversity gain.

When the FDM transmission method is applied, two methods, scheme 2a and 2b, may be supported. Scheme 2a transmits one TB as a multi-RB, and transmits RBs belonging to different RB groups through different Tx beams (i.e., QCL RS or/and TCI state). Scheme 2b transmits the same TB (i.e., the same two TBs) to different RB groups, but transmits RBs belonging to different RB groups through different Tx beams (i.e., QCL RS or/and TCI state).

When the TDM transmission method is applied, two methods, scheme 3 and 4, may be supported. Scheme 4 (i.e., inter-slot) TDM is a method that transmits the same TB repeatedly in multiple slots, but transmits slots belonging to different slot groups with different Tx beams (i.e., QCL RS or/and TCI state).

Scheme 3 (i.e., intra-slot) TDM is a method of repeatedly transmitting the same TB in several OFDM symbol groups, but transmitting some OFDM symbol groups and the remaining OFDM symbol groups with different Tx beams (i.e., QCL RS or/and TCI state).

### M-DCI-based M-TRP PDSCH transmission method

The M-DCI-based M-TRP PDSCH transmission method is a method in which each TRP schedules and transmits the PDSCH through DCI. That is, TRP 1 can transmit PDSCH 1 through DCI 1, and TRP 2 can transmit PDSCH 2 through DCI 2.

When PDSCH 1 and PDSCH 2 overlap on the same frequency/time resource, since two PDSCHs are received from the same RE, resource efficiency increases and transmission capacity can be increased. For this purpose, a CORESET pool, which is a group of several CORESETs, may be used.

For example, TRP 1 may transmit a PDCCH based on CORESET belonging to CORESET pool 0 and a PDSCH scheduled by the PDCCH. TRP 2 may transmit a PDCCH based on CORESET belonging to CORESET pool 1 and a PDSCH scheduled by the corresponding PDCCH.

As another example, a specific TRP may schedule PUSCH transmission to the UE through CORESET belonging to each COERSET pool.

As another example, TRP 1 may receive UCI by scheduling some PUCCH resources, and TRP2 may receive UCI by scheduling the remaining PUCCH resources. For PUSCH and/or PUCCH, the channels scheduled/used by each TRP are TDM with each other, so no overlap occurs, so an increase in transmission capacity cannot be expected. However, the UE may transmit independent PUSCH/PUCCH for each of TRPs 1 and 2.

Additionally, the UE may recognize the PUSCH (or/and PUCCH) scheduled by the DCI received through different CORESETs (or/and CORESET belonging to different CORESET groups) as a PUSCH (or/and PUCCH) transmitted through different TRPs or as a PUSCH (or/and PUCCH) of different TRPs.

Additionally, the same method for UL transmission (e.g., PUSCH/PUCCH) transmitted to different TRPs may also be applied to UL transmission (e.g., PUSCH/PUCCH) transmitted to different panels belonging to the same TRP.

The CORESET group ID described/mentioned in the present disclosure (or COERSET pool index with the same meaning) may mean an index/identification information (e.g., ID) for distinguishing the CORESET for each TRP/panel.

CORESET group may be a group/union of CORESETs distinguished by index/identification information (e.g., ID)/CORESET group ID, etc. to distinguish CORESETs for each TRP/panel.

As an example, CORESET group ID may be specific index information defined within CORSET configurations. For example, a CORESET group may be configured/indicated/defined by an index defined within the CORESET configurations for each CORESET.

Additionally or alternatively, CORESET group ID may mean an index/identification information/indicator, etc. for distinction/identification between CORESETs configured/related to each TRP/panel. The CORESET group ID described/mentioned in this disclosure may be replaced with a specific index/specific identification information/specific indicator for distinction/identification between CORESETs configured/related to each TRP/panel.

The CORESET group ID, that is, a specific index/specific identification information/specific indicator for distinction/identification between CORESETs set/related to each TRP/panel may be configured/indicated through higher layer signaling (e.g., RRC signaling)/L2 signaling (e.g., MAC-CE)/L1 signaling (e.g., DCI), etc.

For example, PDCCH detection for each TRP/panel may be configured/indicated to be performed on a per CORESET group basis. Additionally or alternatively, uplink control information (e.g., CSI, HARQ-A/N, SR) and/or uplink physical channel resources (e.g. PUCCH/PRACH/SRS resources) may be configured/indicated to be managed/controlled separately for each TRP/panel in the corresponding CORESET group unit. Additionally or alternatively, HARQ A/N (process/retransmission) for PDSCH/PUSCH, etc. scheduled for each TRP/panel on a per CORESET group basis may be managed.

For example, the higher layer parameter 'ControlResourceSet IE' is used to configure time/frequency CORESET. For example, the CORESET may be related to detection and reception of downlink control information.

The 'ControlResourceSet IE' may include CORESET related ID (e.g. controlResourceSetID)/index of CORESET pool for CORESET (e.g. 'CORESETPoolIndex')/CORESET time/frequency resource configurations/ TCI information related to CORESET, etc.

For example, the index of the CORESET pool (e.g., 'CORESETPoolIndex') may be set to 0 or 1. In the above description, CORESET group may correspond to CORESET pool, and CORESET group ID may correspond to CORESET pool index (e.g., 'CORESETPoolIndex'). ControlResourceSet (i.e., CORESET) may be set through higher layer signaling.

Enhanced M-TRP transmission method

M-TRP PDCCH repeated transmission, M-TRP PDCCH/PDSCH SFN transmission, S-DCI-based M-TRP PUSCH repeated transmission, and M-TRP PUCCH repeated transmission based on a single PUCCH resource may be supported.

In all of the corresponding transmission methods, the same content (i.e., DCI, UL TB, or UCI) may be transmitted repeatedly in a URLLC target improvement method to increase reliability. M-TRP PDCCH repetitive transmission may be transmitted in TDM or FDM. M-TRP PDCCH/PDSCH SFN transmission may be transmitted repeatedly at the same time/frequency/layer. S-DCI-based M-TRP PUSCH repetitive transmission may be transmitted in TDM. M-TRP PUCCH repeated transmission based on a single PUCCH resource may be TDM and repeatedly transmitted.

### Enhanced S-DCI-based M-TRP PDCCH repetitive transmission

For M-TRP PDCCH repeated transmission, a plurality of CORESETs with different TCI states (i.e., different QCL RS) may be configured for the UE, and multiple SS sets linked to each of the corresponding CORESETs may be configured.

The base station may indicate/configure to the UE that the SS set linked to one CORESET and the SS set linked to another CORESET are linked for repeated transmission, so that the UE may know that the PDCCH candidates of the corresponding SS set are transmitted repeatedly.

For example, CORESET 0 and 1 are configured for the UE, CORESET 0 and 1 are linked to SS sets 0 and 1, respectively, and SS sets 0 and 1 may be linked.

The UE may know that the same DCI has been transmitted repeatedly based on the PDCCH candidate of SS set 0 and the PDCCH candidate of SS set 1, and may know that a specific PDCCH candidate in SS set 0 and a specific PDCCH candidate in SS set 1 are a pair set to repeatedly transmit the same DCI through a specific rule.

Two PDCCH candidates may be referred to as linked PDCCH candidates, and when the UE correctly receives either of the two PDCCH candidates, the corresponding DCI can be successfully decoded.

However, since when receiving the PDCCH candidate of SS set 0, QCL RS (i.e., DL beam) in TCI state of COERSET 0 connected to SS set 0 is used, and when receiving the PDCCH candidate of SS set 1, the QCL RS (i.e., DL beam) in the TCI state of COERSET 1 connected to SS set 1 is used, linked PDCCH candidates may be received through different beams.

### M-TRP SFN PDCCH transmission method

The M-TRP SFN PDCCH transmission method is a method of M-TRP PDCCH repetitive transmission, and may refer to a method in which multiple TRPs repeatedly transmit the same DCI through the same time/frequency/DMRS port. For SFN PDCCH transmission, the base station may configure multiple TCI states for one CORESET instead of configuring multiple CORESETs with different TCI states set.

When receiving a PDCCH candidate through an SS set connected to one CORESET, the UE may perform channel estimation and attempt decoding of the PDCCH DMRS using all of the plurality of TCI states.

### M-TRP SFN PDSCH transmission method

When performing M-TRP PDSCH repeated transmission, the two TRPs may repeatedly transmit the channel using different resources. If the resources used by both TRPs are the same (i.e., they transmit the same channel repeatedly over the same frequency, time, layer (or/and DMRS port)), reliability can be improved through this channel.

Here, since the resources of the same channel that are repeatedly transmitted are not differentiated and are received together in the air, the same channel that is repeatedly transmitted can be recognized as one channel from the receiving end's perspective. For PDSCH SFN transmission, two DL TCI states for PDSCH DMRS reception may be configured for the UE.

### Enhanced S-DCI based M-TRP PUSCH repetitive transmission

The base station may configure two SRS resource sets for the UE for S-DCI-based M-TRP PUSCH transmission. Each SRS resource set may be used to indicate UL Tx port and UL beam/QCL information toward TRP 1 and TRP 2.

Additionally, the base station may indicate SRS resources and/or PC parameters (e.g., up to two) for each SRS resource set through two SRI fields included in one DCI.

For example, the first SRI field may indicate a set of SRS resources and PC parameters defined in SRS resource set 0, and the second SRI field may indicate the SRS resource and PC parameter set defined in SRS resource set 1.

The UE may receive indications about the UL Tx port, PC parameter set, and UL beam/QCL information toward TRP 1 through the first SRI field, and through this, PUSCH transmission may be performed in the TO corresponding to SRS resource set 0. Additionally, the UE may receive indications for the UL Tx port, PC parameter set, and UL beam/QCL information toward TRP 2 through the second SRI field, and through this, PUSCH transmission may be performed in the TO corresponding to SRS resource set 1.

In addition to the SRI field, one existing field may be expanded into two fields so that TPMI, PTRS, TPC fields, etc. can be indicated for each TRP. Additionally, a specific one of two SRS resource sets may be selected through the 2-bit SRS resource set indicator field, and S-TRP PUSCH repeated transmission may be performed accordingly. Additionally, as both SRS resource sets are selected by the 2-bit SRS resource set indicator field, M-TRP PUSCH repeated transmission can be performed.

That is, when the corresponding SRS resource indicator field value is 00 or 01, SRS resource set 0 or SRS resource set 1 is indicated, and S-TRP PUSCH transmission corresponding to each SRS resource set may be performed.

If the value of the corresponding SRS resource indicator field is 10, (SRS resource set 0 and SRS resource set 1) are indicated, and M-TRP PUSCH transmission may be performed in the order in which the SRS resource set pairs are indicated. That is, SRS resource set 0 may correspond to the first PUSCH TO.

If the value of the corresponding SRS resource indicator field is 11, (SRS resource set 1, SRS resource set 0) is indicated, and M-TRP PUSCH transmission can be performed in the order in which the SRS resource set pairs are indicated. That is, SRS resource set 1 may correspond to the first PUSCH TO.

### M-TRP PUCCH repeated transmission based on single PUCCH resource

For M-TRP PUCCH repeated transmission based on a single PUCCH resource, the base station may activate/configure two spatial relation information (in the case of FR1, activate/configure two PC parameter sets) in a single PUCCH resource. When the UE transmits UL UCI through the corresponding PUCCH resource, each spatial relation information may indicate spatial relation information directed to each of TRP 1 and TRP 2.

For example, the UE may be indicated to Tx beam/PC parameters toward TRP 1 through the value indicated in the first spatial relation information, and PUCCH transmission may be performed in TO corresponding to TRP 1 using the corresponding Tx beam/PC parameters. In addition, the UE may be indicated to Tx beam/PC parameters toward TRP 2 through the value indicated in the second spatial relation information, and PUCCH transmission may be performed in TO corresponding to TRP 2 using the corresponding Tx beam/PC parameters.

For M-TRP PUCCH repeated transmission, two spatial relation information may be configured for PUCCH resources. That is, if PC parameters such as PLRS, Alpha, P0, and closed loop index are configured for each spatial relation information, the spatial relation information may be configured.

As a result, PC information and spatial relation RS information corresponding to the two TRPs may be configured through the two spatial relation information. The UE may transmit PUCCH using the first spatial relation information in TO 1, and transmit the same UCI (i.e., CSI, ACKNAK, SR) through PUCCH using the second spatial relation information in TO 2.

Hereinafter, a PUCCH resource with two spatial relation information configured is called an M-TRP PUCCH resource, and a PUCCH resource with one spatial relation information configured is called an S-TRP PUCCH resource.

In addition, hereinafter, from a DL perspective, using (/mapping) a specific TCI state when receiving data/DCI/UCI using specific frequency/time/space resources may mean estimating a channel from DMRS using QCL type and QCL RS indicated by the corresponding DL TCI state in the corresponding frequency/time/space resources and receiving/demodulating data/DCI through the estimated channel.

In addition, from a UL perspective, using (/mapping) a specific TCI state when receiving data/DCI/UCI using specific frequency/time/space resources may mean that DMRS and data/UCI are transmitted/modulated using Tx beam and/or Tx power indicated by the corresponding UL TCI state in the corresponding frequency/time/space resources.

The UL TCI state may include Tx beam or Tx power information of the UE, and instead of the UL TCI state, spatial relation information, etc. may be configured for the UE through other parameters. The UL TCI state may be indicated directly in the UL grant DCI and may mean spatial relation information of the SRS resource indicated through the SRI field of the UL grant DCI.

Additionally or alternatively, UL grant may mean an OL Tx PC parameter (j: Index & alpha for open-loop parameters Po (up to 32 sets of parameter values per cell), q_d: Index of DL RS for PL measurements (up to 4 measurements per cell), I: Closed-loop PC process index (Up to 2 processes per cell) connected to the value indicated through the SRI field of DCI. As another example, UL TCI may be indicated to the terminal using DL grant DCI.

For convenience of description of the present disclosure, cooperative transmission/reception between 2 TRPs is assumed, but the present disclosure may be extended and applied in a multi-TRP environment of 3 or more, and may also be extended and applied in a multi-panel environment. Different TRPs may be recognized by the terminal as different TCI states, and the UE receiving/transmitting data/DCI/UCI using TCI state 1 may mean receiving/transmitting data/DCI/UCI from/to TRP 1.

When multiple channels are TDM, TO may refer to each channel transmitted at different times. When multiple channels are FDM, TO may mean each channel transmitted on a different frequency/RB. When multiple channels are SDM, TO may mean each channel transmitted to a different layer/beam/DMRS port. One TCI state may be mapped to each TO. When transmitting the same channel repeatedly, a complete DCI/data/UCI is transmitted to one TO, and the receiving end can receive multiple TOs to increase the reception success rate.

### Enhanced S-DCI based multi-TB PUSCH/PDSCH scheduling method

In an ultra-high frequency band (e.g., a band exceeding 5.26 GHz), a method in which one DCI simultaneously schedules multiple PUSCHs/PDSCHs may be supported.

For example, multiple TDRAs (=TO) may be indicated at once through the TDRA field of the PUSCH scheduling DCI, and different TBs for each TO may be transmitted through the PUSCH.

The FDRA, MCS, TPMI, and SRI values of the corresponding DCI can be commonly applied to multiple scheduled TBs. In addition, NDI and RV for each TB are individually indicated through the corresponding DCI, and one value is indicated for the HARQ number, but may increase sequentially in TO order based on the initial TO.

### STxMP(simultaneous transmission across multi-panels) transmission method

A method in which the UE simultaneously transmits multiple channels/RSs of the same type or a method in which the terminal transmits multiple channels/RSs of different types simultaneously may be applied.

In the case of a UE on a basic wireless communication system, the operation of transmitting multiple channels/RS at one moment may be limited (e.g., it is possible to transmit multiple SRS resources of different SRS resource sets simultaneously for UL beam measurement, but transmitting multiple PUSCHs simultaneously is limited).

However, a UE on an enhanced wireless communication system may simultaneously transmit multiple channels or RSs using multiple transmission panels, and such a UE may be referred to as an STxMP UE.

For example, two PUSCHs corresponding to two UL TBs may be scheduled on the same RE. For PUSCH 1, spatial relation RS 1 and PC parameter set 1 (i.e. UL TCI state 1) may be configured for the UE, and for PUSCH 2, spatial relation RS 2 and PC parameter set 2 (i.e., UL TCI state 2) may be configured for the UE.

The UE may transmit PUSCH 1 using panel 1 corresponding to UL TCI state 1, and simultaneously transmit PUSCH 2 using panel 2 corresponding to UL TCI state 2.

When scheduling PUSCH through DCI, the base station may indicate/configure the UE to transmit the PUSCH among the STxMP method, single panel-based transmission method, and M-TRP PUSCH repeated transmission method. Here, the UE has the capability for the STxMP method, and the STxMP mode may be activated in advance (via at least one of RRC signaling, SIB, MAC-CE, or DCI).

For this purpose, the SRS resource set indicator field may be redefined and used, or a new DCI field may be introduced. In the present disclosure, the case of using the SRS resource set indication field is described, but the method described later can also be applied to the new DCI field.

When the SRS resource indicator field value is 00 or 01, S-TRP PUSCH transmission may be performed using the Tx beam corresponding to one SRS resource set selected with the value.

Here, one SRS resource set may correspond to one panel, a single panel may be selected with an SRS resource indicator field value (e.g., 00 or 01), and a PUSCH may be transmitted to the selected panel.

When the SRS resource indication field value is 10/11, (each SRS resource set corresponds to one panel) it corresponds to the case where both (or multiple) SRS resource sets are indicated, so STxMP transmission may be performed through two (or multiple) panels.

Hereinafter, the UL DCI indication method for STxMP transmission and dynamic switching between the STxMP method and the M-TRP transmission method will be described.

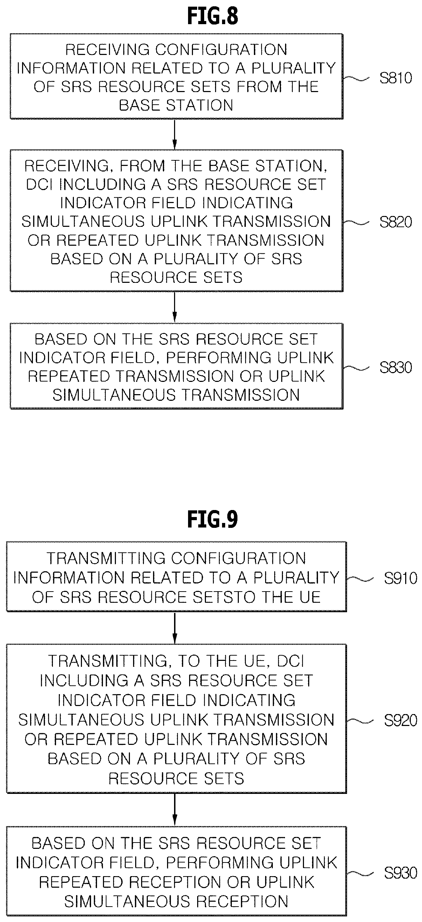

FIG. 8 is a diagram for describing an uplink transmission operation of a terminal in a wireless communication system to which the present disclosure can be applied.

The UE may receive configuration information related to a plurality of sounding reference signal (SRS) resource sets from the base station (S810).

As an example, configuration information related to the SRS resource set may include information related to one or more SRS resources to be included in the SRS resource set (e.g., spatial relation information established for SRS resources or/and the number of SRS resources, etc.), a resource type of the SRS resource set, and a PC parameter set. Here, one SRS resource set may correspond to one TRP or/and one panel.

As an example, the plurality of SRS resource sets may include a first SRS resource set and a second SRS resource set. However, this is only one embodiment, and a plurality of SRS resource sets may include three or more SRS resource sets.

Here, the first SRS resource set may correspond to the first uplink transmission configuration indicator (TCI) state or first spatial relation information, and the second SRS resource set may correspond to the second uplink TCI state or the second spatial relation information.

Additionally or alternatively, the first uplink transmission may include a first PUSCH including (or carrying) a first uplink transport block (TB), and the second uplink transmission may include a second PUSCH including a second uplink TB.

Here, the first uplink TB and the second uplink TB may be different from each other. That is, the first uplink transmission and the second uplink transmission may carry different uplink TBs.

As another example, the first uplink TB and the second uplink TB may be the same. That is, the first uplink transmission and the second uplink transmission may carry the same uplink TB. Here, the first uplink transmission (e.g., the first PUSCH) corresponds to the first layer (i.e., the first PUSCH is transmitted based on the first layer), and as the second uplink transmission corresponds to the second layer (e.g., second PUSCH) (i.e., the second PUSCH is transmitted through the second layer), multi-layer PUSCH transmission including the same uplink TB may be performed.

The UE may transmit capability information related to support for uplink simultaneous transmission (i.e., STxMP) and/or capability information related to the type of uplink simultaneous transmission to the base station.

The UE may receive downlink control information (DCI) from the base station including an SRS resource set indicator (or indication) field indicating simultaneous uplink transmission or repeated uplink transmission based on a plurality of SRS resource sets (S820).

Here, the third information that activates uplink simultaneous transmission may be transmitted from the base station to the UE through at least one of radio resource control (RRC) signaling, medium access control (MAC)-CE (control element), or DCI.

As an example, the SRS resource indicator field may be composed of 2 bits, but is not limited thereto and may be composed of 2 bits or more.

As an example, when the SRS resource indicator field value is 10 (or 11), the SRS resource indicator field may indicate uplink repetitive transmission (e.g., M-TRP-based uplink repetitive transmission). As another example, when the SRS resource indicator field value is 11 (or 10), the SRS resource indicator field may indicate simultaneous uplink transmission.

Based on the SRS resource set indicator field, the UE may perform uplink repeated transmission or uplink simultaneous transmission (S830).

Based on uplink simultaneous transmission being indicated by the SRS resource set indicator field, the UE may perform uplink simultaneous transmission based on first information related to the type of uplink simultaneous transmission in a plurality of transmission occasions (TOs). Here, the first information may be transmitted from the base station to the terminal through at least one of RRC signaling, MAC-CE, or DCI.

As an example, based on the first information indicating a first type of uplink simultaneous transmission (e.g., 'STxMP PUSCH+repetition type I'), the UE may simultaneously perform first uplink transmission corresponding to the first SRS resource set and second uplink transmission corresponding to the second SRS resource set.

Here, assume that the first uplink transmission corresponding to the first SRS resource set is the first PUSCH transmission and the second uplink transmission corresponding to the second SRS resource set is the second PUSCH transmission. The UE may repeatedly perform first PUSCH transmission based on the first SRS resource set (or/and first panel) and repeatedly perform second PUSCH transmission based on the second SRS resource set (or/and second panel) across multiple TOs.

As another example of the present disclosure, assume that the first information indicates a second type of uplink simultaneous transmission (e.g., 'STxMP PUSCH+repetition type II').

Here, each of the first uplink transmission and the second uplink transmission based on the first SRS resource set (or/and first panel) may be mapped to a plurality of TOs. And, each of the first uplink transmission and the second uplink transmission based on the second SRS resource set (or/and second panel) may be mapped to a plurality of TOs.

The first uplink transmission and the second uplink transmission based on each of the first SRS resource set and the second SRS resource set may be mapped to a plurality of TOs based on second information related to the mapping type. Here, the second information may indicate one of sequential mapping or cyclic mapping.

For example, assume that a plurality of TOs are configured to 4 TOs and the second information indicates sequential mapping. In the first panel, the first PUSCH (i.e., first uplink transmission based on the first SRS resource set) may be mapped to 1 TO and 2 TO, and the second PUSCH (i.e., second uplink transmission based on the first SRS resource set) may be mapped to 3 TO and 4 TO. In the second panel, the second PUSCH (i.e., second uplink transmission based on the second SRS resource set) may be mapped to 1 TO and 2 TO, and the first PUSCH (i.e., the first uplink transmission based on the 2nd SRS resource set) may be mapped to 3 TO and 4 TO.

As another example of the present disclosure, assume that uplink repetitive transmission (i.e., M-TRP-based uplink repetitive transmission) is indicated by the SRS resource set indicator field. The UE may perform uplink transmission based on the first SRS resource set in a first TO among the plurality of TOs, and perform uplink transmission based on the second SRS resource set in the second TO among the plurality of TOs.

However, this is only one embodiment, and methods for the terminal to perform repeated uplink transmission across multiple TOs may be implemented in various ways. Configuration information related to a method of performing uplink repetitive transmission across multiple TOs (i.e., a method of mapping uplink transmission to multiple TOs) may be transmitted from the base station to the terminal.

FIG. 9 is a diagram for explaining an uplink reception operation of a base station in a wireless communication system to which the present disclosure may be applied.

The base station may transmit configuration information related to a plurality of sounding reference signal (SRS) resource sets to the UE (S910). Here, the plurality of SRS resource sets may include a first SRS resource set and a second SRS resource set.

The base station may transmit downlink control information (DCI) including an SRS resource set indicator field indicating simultaneous uplink transmission or repeated uplink transmission based on a plurality of SRS resource sets to the UE (S920).

The base station may perform uplink repeated transmission or uplink simultaneous transmission based on the SRS resource set indicator field (S930).

Here, the base station may configure a plurality of TOs (i.e., repetition numbers) for the UE at which uplink repeated transmission or uplink simultaneous transmission will be performed. Accordingly, uplink repeated reception or uplink simultaneous reception based on the SRS resource set indicator field may be performed across multiple TOs.

Since operations and parameters related to S910, S920, and S930 may correspond to operations and parameters related to S810, S820, and S830, redundant description will be omitted.

Hereinafter, i) a dynamic switching method between STxMP transmission methods through the SRS resource set indicator/indication field and ii) a dynamic switching method between the STxMP transmission method and the M-TRP PUSCH transmission method will be described in detail.

### Embodiment 1

If the SRS resource indication field value is 10 or 11, two SRS resource sets may be indicated. In basic wireless communication systems, the corresponding SRS resource indication field value (i.e., 10 or 11) may be used for the purpose of switching the order of the two SRS resource sets, and the UE may perform repeated M-TRP PUSCH transmission in that order.

When the corresponding SRS resource indication field value is indicated for a UE in which STxMP mode is activated (i.e., when the SRS resource indication field value is 10 or 11), the corresponding SRS resource indication field value may be used to indicate the multiplexing domain of STxMP PUSCH.

For example, if the SRS resource indication field value is 10 (or 11) (i.e., when FDM STxMP is indicated), multiple PUSCHs may be transmitted simultaneously from different panels. Here, multiple PUSCHs may be FDMed and transmitted in different RBs.

As another example, when the SRS resource indicator field value is 11 (or 10) (i.e., when SDM STxMP is indicated), Multiple PUSCHs may be transmitted simultaneously from different panels. Here, multiple PUSCHs may be SDMed and transmitted in different layers.

Here, if the repetition number indicated by the base station (i.e., the repetition number indicated through the SLIV (start and length indicator) field of the PUSCH scheduling DCI) is 2 or more, Multiple PUSCHs that are STxMP may correspond to the same UL TB (i.e., repeat transmission). If the number of repetitions indicated by the base station is less than 2, multiple PUSCHs that are STxMP correspond to different UL TBs.

Additionally or alternatively, the base station may indicate through a separate indicator whether the multiple PUSCHs transmitted through STxMP are different UL TBs or the same UL TB.

### Embodiment 2

If the SRS resource set indicator field value is indicated as 10 or 11 for a UE with STxMP mode activated, the field value may be used for M-TRP PUSCH repetition and STxMP PUSCH switching.

For example, when the SRS resource set indicator field value is 10 (or 11), M-TRP PUSCH repeated transmission is indicated, but when the SRS resource set indicator field value is 11 (or 10), STxMP PUSCH transmission in which multiple PUSCHs are transmitted simultaneously from different panels may be indicated.

The multiplexing domain (e.g., FDM/SDM, etc.) of STxMP may be configured in advance by the base station as RRC/MAC CE, etc., or may be determined according to UE capabilities.

Here, if the number of repetitions indicated by the base station (e.g., the number of repetitions indicated through the SLIV field of the PUSCH scheduling DCI) is 2 or more, Multiple PUSCHs that are STxMP may correspond to the same UL TB (i.e., are transmitted repeatedly). If the number of repetitions indicated by the base station is less than 2, multiple PUSCHs that are STxMP may correspond to different UL TBs.

Additionally or alternatively, the base station may indicate through a separate indicator whether the multiple PUSCHs transmitted through STxMP are different UL TBs or the same UL TB.

### Embodiment 3

If the SRS resource set indicator field value is indicated as 10 or 11 for a UE with STxMP mode activated, the field value may be interpreted depending on the number of repetitions (e.g., indicated by the SLIV field).

That is, if the number of repetitions is 2 or more, the SRS resource set indicator field may be used for M-TRP PUSCH repetition. If the number of repetitions is less than 2, the SRS resource set indicator field may be used to indicate STxMP PUSCH. As described above, when an STxMP PUSCH is indicated, multiple PUSCHs transmitted simultaneously transmit different UL TBs.

Additionally or alternatively, thether the base station's STxMP-transmitted multiple PUSCHs are different UL TBs or the same UL TB can be indicated through a separate indicator.

### Embodiment 4

When the SRS resource set indicator field value is indicated as 10 or 11 for a terminal with STxMP mode activated, the corresponding field value may be used for switching "M-TRP PUSCH repetition" and "STxMP PUSCH + repetition".

For example, if the SRS resource set indicator field value is 10 (or 11), M-TRP PUSCH repetition may be indicated. Table 6 illustrates the M-TRP PUSCH repetition (e.g., repetition number = 4 and sequential mapping) transmission method.

**[Table 6]**

| | | TO Index | | | |
|---|---|---|---|---|---|
| | | 1 | 2 | 3 | 4 |
| Panel index | 0 | PUSCH 1 | PUSCH 1 | | |
| | 1 | | | PUSCH 1 | PUSCH 1 |

The panel index of the present disclosure may be implicitly defined in a one-to-one correspondence with the UL TCI state (e.g., panel indices 0 and 1 correspond to the first and second indicated UL TCI states, respectively) or may be indicated. Additionally or alternatively, the panel index of the present disclosure may be implicitly defined in one-to-one correspondence with spatial relationship information, or may be directly defined (e.g., panel indices 0 and 1 correspond to the first and second spatial relation information indicated, respectively) and indicated in the TCI state or spatial relation information.

As another example, when the SRS resource set indicator field value is 11 (or 10), 'STxMP PUSCH+repetition' may be indicated. And, the UE may perform operations with one type (indicated by the base station or reported as a UE capability) among the two types I/II.

### Embodiment 4-1

Embodiment 4-1 relates to 'STxMP PUSCH+repetition type I'. STxMP PUSCH+repetition type I is an STxMP PUSCH transmission method in which multiple PUSCHs (e.g., PUSCH 1 and 2) are transmitted simultaneously on different panels, and each PUSCH may be repeatedly transmitted at different times across multiple (TDMed) TOs. For example, PUSCH 1 may be transmitted on panel 0 corresponding to SRS resource set 0, and at the same time, PUSCH 2 may be transmitted on panel 1 corresponding to SRS resource set 1.

For example, if four TOs are allocated (i.e., number of repetitions = 4), PUSCHs 1 and 2 may be transmitted in the STxMP method in TOs 1, 2, 3, and 4, respectively.

Here, each of PUSCH 1 and PUSCH 2 may transmit a different UL TB, and each PUSCH may be repeatedly transmitted 4 times through 4 TOs. And, each PUSCH may be transmitted using a different indicated panel.

That is, PUSCH 1 may be transmitted through panel 0 corresponding to SRS resource set 0, and PUSCH 2 may be transmitted through panel 1 corresponding to SRS resource set 1. As a result, the PUSCH to panel mapping can be fixed regardless of TO.

Table 7 below illustrates the STxMP PUSCH+repetition type I scheme.

**[Table 7]**

| | TO Index | | | | |
|---|---|---|---|---|---|
| | 1 | 2 | 3 | 4 | |
| Panel index | 0 | PUSCH 1 | PUSCH 1 | PUSCH 1 | PUSCH 1 |
| | 1 | PUSCH 2 | PUSCH 2 | PUSCH 2 | PUSCH 2 |

### Embodiment 4-2

Embodiment 4-2 relates to 'STxMP PUSCH+repetition type II'. Same as STxMP PUSCH+repetition type I, STxMP PUSCH+repetition type II is an STxMP PUSCH transmission method in which multiple PUSCHs (e.g., PUSCH 1 and 2) are transmitted simultaneously on different panels, and each PUSCH may be transmitted repeatedly at different times across multiple (TDMed) TOs.

Unlike STxMP PUSCH+repetition type I, the PUSCH-to-panel mapping may vary for each TO.

For example, if 4 TOs are allocated (i.e., number of repetitions = 4), same as STxMP PUSCH+repetition type I, in TO 1, 2, 3, and 4, respectively, PUSCH 1 and 2 may be transmitted in the STxMP method. Here, PUSCH 1 and PUSCH 2 may transmit different UL TBs, and each PUSCH may be repeatedly transmitted 4 times through 4 TOs.

However, unlike STxMP PUSCH+repetition type I, when STxMP PUSCH+repetition type II is applied, each PUSCH may be transmitted using a different panel in a different TO.

That is, PUSCH 1 may be transmitted through panel 0 corresponding to SRS resource set 0 in TO 1 and 2, and may be transmitted through panel 1 corresponding to SRS resource set 1 in TO 3 and 4. And, PUSCH 2 may be transmitted through panel 1 corresponding to SRS resource set 1 in TO 1 and 2, and may be transmitted through panel 0 corresponding to SRS resource set 0 in TO 3 and 4.

That is, each PUSCH may be sequentially mapped and transmitted for multiple SRS resource sets (or/and panel, Tx beam, or UL TCI states) in multiple TOs. However, this is only an example, and each PUSCH may be transmitted by being cyclically mapped to multiple SRS resource sets in multiple TOs.

Table 8 below illustrates the STxMP PUSCH+repetition type II scheme.

**[Table 8]**

| | | TO Index | | | |
|---|---|---|---|---|---|
| | | 1 | 2 | 3 | 4 |
| Panel index | 0 | PUSCH 1 | PUSCH 1 | PUSCH 2 | PUSCH 2 |
| | 1 | PUSCH 2 | PUSCH 2 | PUSCH 1 | PUSCH 1 |

### Embodiment 5

When 10 or 11 is indicated as the SRS resource set indicator field value for a UE with STxMP mode activated, the field value may be used to indicate 'STxMP PUSCH+repetition type I' or/and 'STxMP PUSCH+repetition type II'.

### Embodiment 6

Assume that 10 or 11 is indicated as the SRS resource set indicator field value for a UE in which STxMP mode is activated. The field value may indicate 'STxMP PUSCH+repetition type II', but may be used to switch the panel mapping order.

For example, assume that the SRS resource set indicator field value is 10 (or 11). In the initial TO, each of PUSCH 1 and 2 may be mapped to panels 0 and 1, respectively, and in the remaining TOs, each PUSCH may be sequentially/cyclically mapped to a panel and transmitted based on the panel mapping of the initial TO. That is, PUSCH 1 may be transmitted through panels 0, 0, 1, and 1 in TO 1, 2, 3, and 4, respectively, and PUSCH 2 may be transmitted through panels 1, 1, 0, and 1 in TO 1, 2, 3, and 4, respectively. and 0.

As another example, assume that the SRS resource set indicator field value is 11 (or 10). In the initial TO, PUSCHs 1 and 2 are mapped to panels 1 and 0, respectively, and in the remaining TOs, each PUSCH may be sequentially/cyclically mapped to panels and transmitted based on the panel mapping of the initial TO. That is, PUSCH 1 is transmitted through panels 1, 1, 0, and 0 in TO 1, 2, 3, and 4 respectively, and PUSCH 2 may be transmitted through panels 0, 0, 1, and 1 in TO 1, 2, 3, and 4.

Table 9 shows an example in which the panel mapping order is switched when the SRS resource indicator field value is 10.

**[Table 9]**

| | | TO Index | | | |
|---|---|---|---|---|---|
| | | 1 | 2 | 3 | 4 |
| Panel index | 0 | PUSCH 1 | PUSCH 1 | PUSCH 2 | PUSCH 2 |
| | 1 | PUSCH 2 | PUSCH 2 | PUSCH 1 | PUSCH 1 |

Table 10 shows an example in which the panel mapping order is switched when the SRS resource indicator field value is 11.

**[Table 10]**

| | | TO Index | | | |
|---|---|---|---|---|---|
| | | 1 | 2 | 3 | 4 |
| Panel index | 0 | PUSCH 2 | PUSCH 2 | PUSCH 1 | PUSCH 1 |
| | 1 | PUSCH 1 | PUSCH 1 | PUSCH 2 | PUSCH 2 |

### Embodiment 7

According to S-DCI-based multi-TB PUSCH scheduling, one DCI can schedule multiple PUSCHs. Embodiment 7 relates to a transmission method when the number of PUSCHs is 2 or less.

That is, it is assumed that PUSCH 1 and 2 are scheduled by S-DCI-based multi-TB PUSCH scheduling, and the time domain resource allocation of PUSCH 1 and 2 is the same.

STxMP PUSCH+repetition type I or II may be applied through the repetition number indicated by the corresponding DCI and the SRS resource set indicator field value (e.g., 10/11). When DCI schedules one PUSCH, STRP/MTRP PUSCH repetition operation can be performed through the SRS resource set indicator field.

### Embodiment 8

In Embodiment 1, the case where the FDM STxMP method and the SDM STxMP method are applied was described, but one of various STxMP methods may be indicated/configured.

For example, in the case of SFN STxMP, two panels may transmit the same PUSCH using the same layer/frequency/time resources.

Hereinafter, the transmission method for STxMP PUSCH in the S-DCI-based M-TRP system will be described.

The STxMP PUSCH transmission method may be based on the SDM method. That is, the STxMP PUSCH transmission method based on the SDM method means that different layers/DMRS ports of one PUSCH are individually precoded and the PUSCH is transmitted simultaneously from different UE panels. The base station mat support two CWs (codewords) in the SDM method and may configure/indicate the UE whether to transmit simultaneously on two different panels.

As another example, the STxMP PUSCH transmission method may be based on the FDM-B method.

As another example, the STxMP PUSCH transmission method may be based on the FDM-B method. That is, the STxMP PUSCH transmission method based on the FDM-B method refers to the method in which PUSCH is transmitted from different UE panels in a frequency domain resources where two PUSCH TOs with same/different RVs of the same TB do not overlap and the same time domain resource.

As another example, the STxMP PUSCH transmission method may be based on the FDM-A method. That is, the STxMP PUSCH transmission method based on the FDM-A method means that PUSCH is transmitted from different UE panels in different parts of the frequency domain resources of one PUSCH TO.

As another example, in the SDM repetition method, two PUSCH TOs with different RVs of the same TB may be transmitted simultaneously in two different UE panels.

In the case of the FDM-based STxMP transmission method, the first half of the RBs allocated for PUSCH may be transmitted using panel 0, and the remaining RBs may be transmitted using panel 1.

Additionally or alternatively, Panel 1 may produce a better channel in the first half RB. At this time, PUSCH may be transmitted from panel 1 to the first half RB. Therefore, the base station may dynamically instruct the UE to do 1:1 mapping between two panels and two RB groups. For this purpose, the SRS resource set indicator field (i.e., the value indicated by the field (e.g., 11/01)) may be used.

That is, if the field value is 11 (or, 01/10), UL transmission may be performed from panel 1 to the first half RB and UL transmission may be performed from panel 0 to the remaining RBs. As another example, if the field value is 01/10 (or 11), in 01/10, UL transmission may be performed from panel 0 to the first half RB, and UL transmission may be performed from panel 1 to the remaining RB.

### Embodiment 9

As disclosed in Table 11, dynamic switching between STxMP PUSCH method and PUSCH TDM repeated transmission may be indicated using the SRS resource set indicator field.

**[Table 11]**

| Value of the SRS Resource Set Indicator field | RepNum=1 | RepNum>1 |
|---|---|---|
| 10 | SDM STxMP | PUSCH repetition |
| 11 | SFN STxMP | SFN STxMP + time domain repetition |

Specifically, when RepNum (i.e., repetition number) is greater than 1, the TDM repeated transmission method may be applied according to the SRS resource set indicator field value (e.g., 10 or 11). As another example, whether the STxMP method and the TDM repetitive transmission method are combined may be determined depending on whether the SRS resource set indicator field value is 10 or 11. As disclosed in Table 11, if the SRS Resource Set Indicator field value is 10, instead of applying the SDM STxMP method and the TDM repetitive transmission method together, only the TDM repetitive transmission method may be applied.

Since the SDM transmission method is used to improve UL transmission speed for eMBB, and the TDM repeat transmission method is used to improve reliability for URLLC, the motivation to combine these two approaches may be weak.

If the SRS resource set indicator field value is 11, since both the SFN STxMP method and the TDM repetitive transmission method are used to improve reliability for URLLC, higher reliability can be achieved when these two methods are applied together. Therefore, the SFN STxMP method and the TDM repetitive transmission method can be applied together. That is, a plurality of TOs are set at different times, and the same PUSCH may be transmitted repeatedly in the corresponding TO. Additionally, the SFN STxMP method may be applied to the PUSCH in each TO.

In this way, dynamic switching between SDM STxMP, SFN STxMP, TDM repeat, and SFN STxMP + TDM repeat transmission methods may be possible. However, M-TRP beam ordering switching, which was supported in the TDM repetitive transmission method, may not be supported.

For the above-described embodiments, the method by which the base station indicates/configures a specific configuration method to the terminal through the SRS resource set indicator field has been described, but is not limited to this. A specific configuration method may be indicated/configured through a separate field of DCI rather than the SRS resource set indicator field, and the above-described embodiments can be applied in that case as well.

For PUSCH in the above-described embodiments, multiple panels may correspond to multiple SRS resource sets set for CB/NCB purposes (e.g., panel 1/2 corresponds to SRS resource set 0/1). As another example, a plurality of panels may correspond to SRS resources indicated by a plurality of SRI fields (e.g., panel 1/2 corresponds to an SRS resource indicated by the first/second SRI field). As another example, multiple panels may correspond to PMI indicated by multiple TPMI fields (e.g., panel 1/2 corresponds to PMI indicated by the first/second TPMI fields).

For PUSCH in the above-described embodiments, a plurality of panels may correspond to a plurality of spatial relationship information set in the PUCCH resource (for example, panel 1/2 corresponds to spatial relation information 0/1).

Additionally or alternatively, a panel ID can be applied for direct indication of a specific panel. Additionally or alternatively, multiple panels may correspond to multiple UL TCI states indicated using a unified TCI framework.

Additionally or alternatively, a panel may be defined as a group of antenna ports with coherency. For example, if 4Tx codebook is configured, the PUSCH antenna ports (1000, 1002) may be defined as panel 1, and the PUSCH antenna ports (1001, 1003) may be defined as panel 2.

When the 8Tx codebook is configured, the PUSCH antenna ports (1000, 1002, 1004, 1006) may be defined as panel 1, and the PUSCH antenna ports (1001, 1003, 1005, 1007) may be defined as panel 2.

In the case of Non CB PUSCH, PTRS port index may be configured for each SRS resource, and SRS resources for which the same PTRS port index is set may be assumed to be transmitted on the same panel.

In above-described embodiments, for convenience of explanation, Two STxMP panels, two UL TCI states, and two sets of spatial relation information/RS and PC parameters configured for UL MTRP transmission were assumed. However, this is only an example, and the number of STxMP panels, the number of UL TCI states, and spatial relation information/RS and PC parameter sets can be expanded to N1, N2, and N3, respectively.

The above-described embodiments may be partially/entirely combined/combined.

The above-described embodiments have been described based on PUSCH transmission and reception, but can be extended and applied to other channels such as PUCCH/(PDSCH/PDCCH/)SRS.

Whether or not the above-described embodiments are applied, the factors used in the above-described embodiments may be indicated by the base station to the terminal through a DCI/MAC-CE/RRC signal or reported by the UE to the base station. That is, the signaling related to the above-described embodiment has been described based on DCI, but the above-described embodiment may also be applied to various signaling such as RRC/MAC-CE.

Additionally, various embodiments of the present disclosure can be extended and applied to the M-DCI-based M-TRP transmission method.

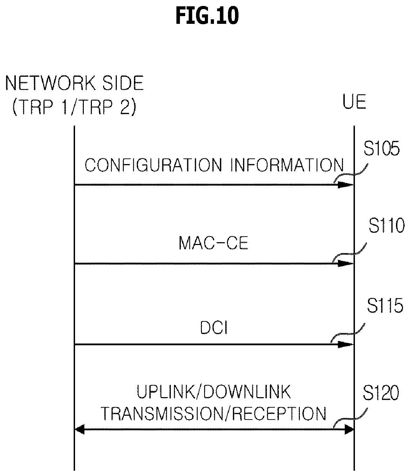

FIG. 10 is a diagram for describing the signaling procedure of the network side and the UE according to an embodiment of the present disclosure.

FIG. 10 shows an example of signaling between a network side and a terminal (UE) in an M-TRP situation to which the Embodiments (e.g., Embodiment 1, Embodiment 2, Embodiment 3, Embodiment 4, Embodiment 5, Embodiment 6, Embodiment 7, Embodiment 8, Embodiment 9 or a combination of one or more of their specific Embodiments) of the present disclosure described above may be applied.

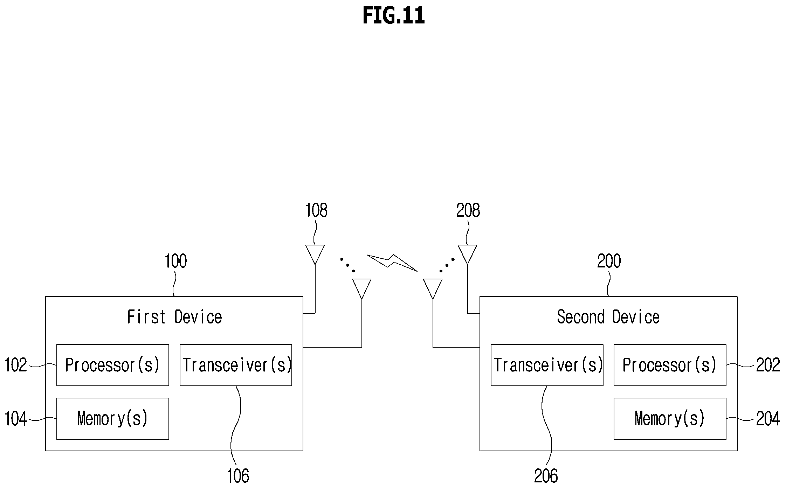

Here, the UE/network side is an example and may be replaced with various devices as described with reference to FIG. 11. FIG. 10 is for convenience of explanation and does not limit the scope of the present disclosure. Additionally, some step(s) shown in FIG. 10 may be omitted depending on the situation and/or settings. Additionally, in the operation of the network side/UE in FIG. 10, the above-described uplink transmission and reception operation, M-TRP-related operation, etc. may be referenced or used.

In the following description, the network side may be one base station including a plurality of TRPs, or may be one cell including a plurality of TRPs. Alternatively, the network side may include a plurality of remote radio heads (RRHs)/remote radio units (RRUs). For example, an ideal/non-ideal backhaul may be established between TRP 1 and TRP 2 constituting the network side. In addition, although the following description is based on a plurality of TRPs, this may be equally extended and applied to transmission through a plurality of panels/cells, and may also be extended and applied to transmission through a plurality of RRHs/RRUs.

In addition, it is described based on a "TRP" in the following description, but as described above, a "TRP" may be applied by being substituted with an expression such as a panel, an antenna array, a cell (e.g., a macro cell/a small cell/a pico cell, etc.), a TP (transmission point), a base station(gNB, etc.), etc. As described above, a TRP may be classified according to information on a CORESET group (or a CORESET pool) (e.g., a CORESET index, an ID).

In an example, when one UE is configured to perform transmission and reception with a plurality of TRPs (or cells), it may mean that a plurality of CORESET groups (or CORESET pools) are configured for one terminal. A configuration on such a CORESET group (or a CORESET pool) may be performed through higher layer signaling (e.g., RRC signaling, etc.).

In addition, a base station may generally mean an object which performs transmission and reception of data with a terminal. For example, the base station may be a concept which includes at least one TP(Transmission Point), at least one TRP(Transmission and Reception Point), etc. In addition, a TP and/or a TRP may include a panel, a transmission and reception unit, etc. of a base station.

The UE may receive configuration information from the network side through/using TRP1 and/or TRP2 (S105).

The configuration information may include information related to CORESET in which a plurality of TCI states are configured. The configuration information may include information related to network-side configuration (i.e., TRP configuration), resource allocation information related to transmission and reception based on M-TRP, and the like. The configuration information may be transmitted through higher layers (e.g., RRC, MAC CE). In addition, when the configuration information is defined or configured in advance, the corresponding step may be omitted.

As another example, the configuration information may include information related to one or more SRS resource sets, and information related to one or more SRS resources that may be included in the SRS resource set.

As another example, the configuration information may include information related to a plurality of TOs in which repeated uplink transmission or simultaneous uplink transmission will be performed. As another example, the configuration information may include information for activating uplink simultaneous transmission.

For example, the operation of the UE (100 or 200 in FIG. 11) in step S105 described above receiving the configuration information from the network side (200 or 100 in FIG. 11) can be implemented by the device in FIG. 11, which will be described below. For example, referring to FIG. 11, one or more processors 102 may control one or more transceivers 106 and/or one or more memories 104 to receive the configuration information, and one or more transceivers 106 may receive the configuration information from a network side.

The UE may receive MAC CE from the network side through/using TRP1 and/or TRP2 (S110).

As an example, MAC-CE can activate simultaneous uplink transmission. As another example, MAC-CE may activate the TCI state (candidate) corresponding to each SRS resource set. The operation of the UE receiving MAC-CE from the network may be omitted.

For example, the operation of the UE (100 or 200 in FIG. 11) in step S115 described above to receive the MAC CE from the network side (200 or 100 in FIG. 11) can be implemented by the device in FIG. 11, which will be described below. For example, referring to FIG. 11, one or more processors 102 may control one or more transceivers 106 and/or one or more memories 104 to receive the MAC CE, and one or more transceivers 106 may receive the MAC CE from a network side.

The UE may receive DCI from the network side through/using TRP1 and/or TRP2 (S115).

For example, the UE may receive a DCI scheduling uplink/downlink from the network side. Additionally, if the control information is defined or configured in advance, the corresponding step may be omitted.

Here, the DCI may include an SRS resource set indicator field indicating simultaneous uplink transmission or repeated uplink transmission based on a plurality of SRS resource sets. Based on multiple SRS resource sets being configured, DCI may include a plurality of SRS resource indicator fields to indicate one or more SRS resources included in each of a plurality of SRS resource sets.

For example, the operation of the UE (100 or 200 in FIG. 11) in step S115 described above receiving the control information from the network side (200 or 100 in FIG. 11) can be implemented by the device in FIG. 11, which will be described below. For example, referring to FIG. 11, one or more processors 102 may control one or more transceivers 106 and/or one or more memories 104 to receive the control information, and one or more transceivers 106 may receive the control information from a network side.

The UE may transmit uplink or receive downlink to the network (S120).

The UE may perform uplink repeated transmission or uplink simultaneous transmission based on the SRS resource set indicator field.

For example, based on simultaneous uplink transmission being indicated by the SRS resource set indicator field, the UE may perform uplink simultaneous transmission based on first information related to the type of uplink simultaneous transmission in a plurality of transmission occasions (TOs).

As another example, assume that uplink repetitive transmission is indicated by the SRS resource set indicator field. The UE may perform uplink transmission based on the first SRS resource set in the first TO among the plurality of TOs, and may perform uplink transmission based on the second SRS resource set in the second TO among the plurality of TOs.

For example, the operation of the UE (100 or 200 in FIG. 11) in step S120 described above transmitting uplink to the network side (200 or 100 in Fig. 11) or receiving downlink from the network side (200 or 100 in FIG. 11) can be implemented by the device of FIG. 11, which will be described below.

For example, referring to FIG. 11, one or more processors 102 may control one or more transceivers 106 and/or one or more memories 104, etc. to transmit uplink or receive downlink, and one or more transceivers 106 may transmit uplink or receive downlink to the network side.

### General Device to which the Present Disclosure may be applied

FIG. 11 is a diagram which illustrates a block diagram of a wireless communication system according to an embodiment of the present disclosure.

In reference to FIG. 11, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer.

A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium.

A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

### [Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

## Claims

1. A method comprising:
receiving (S810), by a user equipment, UE, from a base station, configuration information related to a plurality of sounding reference signal, SRS, resource sets, the plurality of SRS resource sets including a first SRS resource set and a second SRS resource set;
receiving (S820), by the UE from the base station, downlink control information, DCI, including an SRS resource set indicator field indicating uplink simultaneous transmission or uplink repeated transmission based on the plurality of SRS resource sets; and
based on the SRS resource set indicator field, performing (S830), by the UE, the uplink repeated transmission or the uplink simultaneous transmission,
wherein based on the uplink simultaneous transmission being indicated by the SRS resource set indicator field and a second type of uplink simultaneous transmission being indicated by first information:
each of first uplink transmission and second uplink transmission based on the first SRS resource set is mapped to a plurality of transmission occasions, TOs, and
each of the first uplink transmission and the second uplink transmission based on the second SRS resource set is mapped to the plurality of TOs,
wherein based on the uplink repeated transmission being indicated by the SRS resource set indicator field:
third uplink transmission based on the first SRS resource set is performed in a first TO among the plurality of TOs, and
fourth uplink transmission based on the second SRS resource set is performed in a second TO among the plurality of TOs.

2. The method of claim 1, wherein:
the first SRS resource set corresponds to a first uplink transmission configuration indicator, TCI, state or first spatial relation information, and
the second SRS resource set corresponds to a second uplink TCI state or second spatial relation information.

3. The method of claim 2, wherein:
based on the uplink simultaneous transmission being indicated by the SRS resource set indicator field and a first type of uplink simultaneous transmission being indicated by the first information:
the first uplink transmission related to the first SRS resource set and a second uplink transmission related to the second SRS resource set are performed simultaneously, and
each of the first uplink transmission and the second uplink transmission is repeatedly transmitted across the plurality of TOs.

4. The method of claim 1, wherein:
the first uplink transmission and the second uplink transmission based on each of the first SRS resource set and the second SRS resource set are mapped to the plurality of TOs based on second information related to a mapping type.

5. The method of claim 4, wherein:
the second information includes information indicating one of sequential mapping or cyclic mapping.

6. The method of claim 2, wherein:
capability information related to a type of uplink simultaneous transmission is transmitted to the base station.

7. The method of claim 1, wherein:
third information activating the uplink simultaneous transmission is received from the base station through at least one of radio resource control, RRC, signaling, medium access control-control element, MAC-CE, or the DCI.

8. The method of claim 2, wherein:
the first uplink transmission includes a first physical uplink shared channel, PUSCH, including a first uplink transport block, TB, and
the second uplink transmission includes a second PUSCH including a second uplink TB.

9. The method of claim 8, wherein:
based on the first uplink TB and the second uplink TB being same:
the first PUSCH corresponds to a first layer, and the second PUSCH corresponds to a second layer different from the first layer.

10. A user equipment, UE, (100) comprising:
at least one transceiver (106); and
at least one processor (102) connected to the at least one transceiver (106),
wherein the at least one processor (102) is configured to:
receive, from a base station, configuration information related to a plurality of sounding reference signal, SRS, resource sets, the plurality of SRS resource sets including a first SRS resource set and a second SRS resource set;
receive, from the base station, downlink control information, DCI, including an SRS resource set indicator field indicating uplink simultaneous transmission or uplink repeated transmission based on the plurality of SRS resource sets; and
based on the SRS resource set indicator field, perform the uplink repeated transmission or the uplink simultaneous transmission,
wherein based on the uplink simultaneous transmission being indicated by the SRS resource set indicator field and a second type of uplink simultaneous transmission being indicated by first information:
each of first uplink transmission and second uplink transmission based on the first SRS resource set is mapped to a plurality of transmission occasions, TOs, and
each of the first uplink transmission and the second uplink transmission based on the second SRS resource set is mapped to the plurality of TOs,
wherein based on the uplink repeated transmission being indicated by the SRS resource set indicator field:
third uplink transmission based on the first SRS resource set is performed in a first TO among the plurality of TOs, and
fourth uplink transmission based on the second SRS resource set is performed in a second TO among the plurality of TOs.

11. A base station (200) comprising:
at least one transceiver (206); and
at least one processor (202) connected to the at least one transceiver (206),
wherein the at least one processor (202) is configured to:
transmit, to a user equipment, UE, through the at least one transceiver, configuration information related to a plurality of sounding reference signal, SRS, resource sets, the plurality of SRS resource sets including a first SRS resource set and a second SRS resource set;
transmit, to the UE through the at least one transceiver, downlink control information, DCI, including an SRS resource set indicator field indicating uplink simultaneous reception or uplink repeated reception based on the plurality of SRS resource sets; and
based on the SRS resource set indicator field, perform uplink repeated reception or uplink simultaneous reception,
wherein based on the uplink simultaneous reception being indicated by the SRS resource set indicator field and a second type of uplink simultaneous reception being indicated by first information:
each of first uplink reception and second uplink reception based on the first SRS resource set is mapped to a plurality of transmission occasions, TOs, and
each of the first uplink reception and the second uplink reception based on the second SRS resource set is mapped to the plurality of TOs,
wherein based on the uplink repeated reception being indicated by the SRS resource set indicator field:
third uplink reception based on the first SRS resource set is performed in a first TO among the plurality of TOs, and
fourth uplink reception based on the second SRS resource set is performed in a second TO among the plurality of TOs.

## Patentansprüche

1. Verfahren, umfassend:
Empfangen (S810), durch ein Benutzergerät, UE, von einer Basisstation, von Konfigurationsinformationen, die sich auf eine Mehrzahl von Sounding Reference Signal-, SRS-, Ressourcensätzen beziehen, wobei die Mehrzahl von SRS-Ressourcensätzen einen ersten SRS-Ressourcensatz und einen zweiten SRS-Ressourcensatz enthält;
Empfangen (S820), durch das UE von der Basisstation, von Downlink-Steuerinformationen, DCI, die ein SRS-Ressourcensatz-Indikatorfeld enthalten, das auf der Grundlage der Mehrzahl von SRS-Ressourcensätzen eine gleichzeitige Uplink-Übertragung oder eine wiederholte Uplink-Übertragung anzeigt; und
auf der Grundlage des SRS-Ressourcensatz-Indikatorfelds, Durchführen (S830), durch das UE, der wiederholten Uplink-Übertragung oder der gleichzeitigen Uplink-Übertragung,
wobei auf der Grundlage, dass die gleichzeitige Uplink-Übertragung durch das SRS-Ressourcensatz-Indikatorfeld angezeigt wird und eine zweite Art von gleichzeitiger Uplink-Übertragung durch erste Informationen angezeigt wird:
sowohl die erste Uplink-Übertragung als auch die zweite Uplink-Übertragung auf der Grundlage des ersten SRS-Ressourcensatzes auf eine Mehrzahl von Übertragungszeitpunkten, TOs, abgebildet werden, und
sowohl die erste Uplink-Übertragung als auch die zweite Uplink-Übertragung auf der Grundlage des zweiten SRS-Ressourcensatzes auf die Mehrzahl von TOs abgebildet werden,
wobei auf der Grundlage, dass die wiederholte Uplink-Übertragung durch das SRS-Ressourcensatz-Indikatorfeld angezeigt wird:
eine dritte Uplink-Übertragung auf der Grundlage des ersten SRS-Ressourcensatzes in einem ersten TO unter der Mehrzahl von TOs durchgeführt wird, und
eine vierte Uplink-Übertragung auf der Grundlage des zweiten SRS-Ressourcensatzes in einem zweiten TO unter der Mehrzahl von TOs durchgeführt wird.

2. Verfahren nach Anspruch 1, wobei:
der erste SRS-Ressourcensatz einem ersten Uplink-Übertragungskonfigurationsindikator-, TCI-, Zustand oder ersten räumlichen Beziehungsinformationen entspricht, und
der zweite SRS-Ressourcensatz einem zweiten Uplink-TCI-Zustand oder zweiten räumlichen Beziehungsinformationen entspricht.

3. Verfahren nach Anspruch 2, wobei:
auf der Grundlage, dass die gleichzeitige Uplink-Übertragung durch das SRS-Ressourcensatz-Indikatorfeld angezeigt wird und eine erste Art einer gleichzeitigen Uplink-Übertragung durch die ersten Informationen angezeigt wird:
die erste Uplink-Übertragung, die sich auf den ersten SRS-Ressourcensatz bezieht, und eine zweite Uplink-Übertragung, die sich auf den zweiten SRS-Ressourcensatz bezieht, gleichzeitig durchgeführt werden, und
sowohl die erste Uplink-Übertragung als auch die zweite Uplink-Übertragung wiederholt über die Mehrzahl von TOs übertragen werden.

4. Verfahren nach Anspruch 1, wobei:
die erste Uplink-Übertragung und die zweite Uplink-Übertragung, auf der Grundlage des ersten SRS-Ressourcensatzes und des zweiten SRS-Ressourcensatzes, auf der Grundlage von zweiten Informationen, die sich auf eine Abbildungsart beziehen, auf die Mehrzahl von TOs abgebildet werden.

5. Verfahren nach Anspruch 4, wobei:
die zweiten Informationen Informationen enthalten, die entweder eine sequenzielle Abbildung oder eine zyklische Abbildung angeben.

6. Verfahren nach Anspruch 2, wobei:
Fähigkeitsinformationen, die sich auf eine Art der gleichzeitigen Uplink-Übertragung beziehen, an die Basisstation übertragen werden.

7. Verfahren nach Anspruch 1, wobei:
dritte Informationen, die die gleichzeitige Uplink-Übertragung aktivieren, von der Basisstation über mindestens eines der folgenden empfangen werden: Funkressourcensteuerungs-, RRC-, Signalisierung, Medienzugriffssteuerungs-Steuerelement, MAC-CE, oder die DCI.

8. Verfahren nach Anspruch 2, wobei:
die erste Uplink-Übertragung einen ersten physikalischen Uplink-Shared-Kanal, PUSCH, enthält, der einen ersten Uplink-Transportblock, TB, enthält, und
die zweite Uplink-Übertragung einen zweiten PUSCH enthält, der einen zweiten Uplink-TB enthält.

9. Verfahren nach Anspruch 8, wobei:
auf der Grundlage, dass der erste Uplink-TB und der zweite Uplink-TB identisch sind:
der erste PUSCH einer ersten Schicht entspricht und der zweite PUSCH einer zweiten Schicht entspricht, die sich von der ersten Schicht unterscheidet.

10. Benutzergerät, UE, (100), umfassend:
mindestens einen Transceiver (106); und
mindestens einen Prozessor (102), der mit dem mindestens einen Transceiver (106) verbunden ist,
wobei der mindestens eine Prozessor (102) konfiguriert ist zum:
Empfangen, von einer Basisstation, von Konfigurationsinformationen, die sich auf eine Mehrzahl von Sounding Reference Signal-, SRS-, Ressourcensätzen beziehen, wobei die Mehrzahl von SRS-Ressourcensätzen einen ersten SRS-Ressourcensatz und einen zweiten SRS-Ressourcensatz enthält;
Empfangen, von der Basisstation, von Downlink-Steuerinformationen, DCI, die ein SRS-Ressourcensatz-Indikatorfeld enthalten, das auf der Grundlage der Mehrzahl von SRS-Ressourcensätzen eine gleichzeitige Uplink-Übertragung oder eine wiederholte Uplink-Übertragung anzeigt; und
auf der Grundlage des SRS-Ressourcensatz-Indikatorfelds, Durchführen der wiederholten Uplink-Übertragung oder der gleichzeitigen Uplink-Übertragung,
wobei auf der Grundlage, dass die gleichzeitige Uplink-Übertragung durch das SRS-Ressourcensatz-Indikatorfeld angezeigt wird und eine zweite Art von gleichzeitiger Uplink-Übertragung durch erste Informationen angezeigt wird:
sowohl die erste Uplink-Übertragung als auch die zweite Uplink-Übertragung auf der Grundlage des ersten SRS-Ressourcensatzes auf eine Mehrzahl von Übertragungszeitpunkten, TOs, abgebildet werden und
sowohl die erste Uplink-Übertragung als auch die zweite Uplink-Übertragung auf der Grundlage des zweiten SRS-Ressourcensatzes auf die Mehrzahl von TOs abgebildet werden,
wobei auf der Grundlage, dass die wiederholte Uplink-Übertragung durch das SRS-Ressourcensatz-Indikatorfeld angezeigt wird:
eine dritte Uplink-Übertragung auf der Grundlage des ersten SRS-Ressourcensatzes in einem ersten TO unter der Mehrzahl von TOs durchgeführt wird, und
eine vierte Uplink-Übertragung auf der Grundlage des zweiten SRS-Ressourcensatzes in einem zweiten TO unter der Mehrzahl von TOs durchgeführt wird.

11. Basisstation (200), umfassend:
mindestens einen Transceiver (206); und
mindestens einen Prozessor (202), der mit dem mindestens einen Transceiver (206) verbunden ist,
wobei der mindestens eine Prozessor (202) konfiguriert ist zum:
Übertragen, an ein Benutzergerät, UE, über den mindestens einen Transceiver, von Konfigurationsinformationen, die sich auf eine Mehrzahl von Sounding Reference Signal-, SRS-, Ressourcensätzen beziehen, wobei die Mehrzahl von SRS-Ressourcensätzen einen ersten SRS-Ressourcensatz und einen zweiten SRS-Ressourcensatz enthält;
Übertragen, an das UE über den mindestens einen Transceiver, von Downlink-Steuerinformationen, DCI, die ein SRS-Ressourcensatz-Indikatorfeld enthalten, das auf der Grundlage der Mehrzahl von SRS-Ressourcensätzen einen gleichzeitigen Uplink-Empfang oder einen wiederholten Uplink-Empfang anzeigt; und
auf der Grundlage des SRS-Ressourcensatz-Indikatorfelds, Durchführen eines wiederholten Uplink-Empfangs oder eines gleichzeitigen Uplink-Empfangs,
wobei auf der Grundlage, dass der gleichzeitige Uplink-Empfang durch das SRS-Ressourcensatz-Indikatorfeld angezeigt wird und eine zweite Art von gleichzeitigem Uplink-Empfang durch erste Informationen angezeigt wird:
sowohl der erste Uplink-Empfang als auch der zweite Uplink-Empfang auf der Grundlage des ersten SRS-Ressourcensatzes auf eine Mehrzahl von Übertragungszeitpunkten, TOs, abgebildet werden, und
sowohl der erste Uplink-Empfang als auch der zweite Uplink-Empfang auf der Grundlage des zweiten SRS-Ressourcensatzes auf die Mehrzahl von TOs abgebildet werden,
wobei auf der Grundlage, dass der wiederholte Uplink-Empfang durch das SRS-Ressourcensatz-Indikatorfeld angezeigt wird:
ein dritter Uplink-Empfang auf der Grundlage des ersten SRS-Ressourcensatzes in einem ersten TO unter der Mehrzahl von TOs durchgeführt wird, und
ein vierter Uplink-Empfang auf der Grundlage des zweiten SRS-Ressourcensatzes in einem zweiten TO unter der Mehrzahl von TOs durchgeführt wird.

## Revendications

1. Procédé comprenant :
la réception (S810), par un équipement utilisateur, UE, en provenance d'une station de base, d'informations de configuration relatives à une pluralité d'ensembles de ressources de signal de sondage, SRS, la pluralité d'ensembles de ressources SRS comprenant un premier ensemble de ressources SRS et un deuxième ensemble de ressources SRS;
la réception (S820), par l'UE en provenance de la station de base, d'informations de commande de liaison descendante, DCI, comprenant un champ indicateur d'ensemble de ressources SRS indiquant une transmission simultanée en liaison montante ou une transmission répétée en liaison montante sur la base de la pluralité d'ensembles de ressources SRS; et
en fonction du champ indicateur de l'ensemble de ressources SRS, la réalisation (S830) par l'UE d'une transmission répétée en liaison montante ou d'une transmission simultanée en liaison montante,
dans lequel, sur la base de la transmission simultanée en liaison montante indiquée par le champ indicateur d'ensemble de ressources SRS et d'un deuxième type de transmission simultanée en liaison montante indiqué par les premières informations:
chacune des première et deuxième transmissions en liaison montante, basées sur le premier ensemble de ressources SRS, est mappée à une pluralité d'occasions de transmission, TO, et
chacune des première et deuxième transmissions en liaison montante, basées sur le deuxième ensemble de ressources SRS, est mappée à la pluralité de TO,
dans lequel, sur la base de la transmission répétée en liaison montante indiquée par le champ indicateur d'ensemble de ressources SRS:
la troisième transmission en liaison montante, basée sur le premier ensemble de ressources SRS, est effectuée au cours d'une première TO parmi la pluralité de TO, et
la quatrième transmission en liaison montante, basée sur le deuxième ensemble de ressources SRS, est effectuée au cours d'une deuxième TO parmi la pluralité de TO.

2. Procédé selon la revendication 1, dans lequel:
le premier ensemble de ressources SRS correspond à un premier état d'indicateur de configuration de transmission en liaison montante, TCI, ou à des s informations de relation spatiale, et
le deuxième ensemble de ressources SRS correspond à un deuxième état TCI de liaison montante ou à des deuxièmes informations de relation spatiale.

3. Procédé selon la revendication 2, dans lequel:
en fonction de la transmission simultanée en liaison montante indiquée par le champ indicateur d'ensemble de ressources SRS et d'un premier type de transmission simultanée en liaison montante indiqué par les premières informations:
la première transmission en liaison montante relative au premier ensemble de ressources SRS et une deuxième transmission en liaison montante relative au deuxième ensemble de ressources SRS sont effectuées simultanément, et
chacune des première et deuxième transmissions en liaison montante est transmise de manière répétée sur la pluralité des TO.

4. Procédé selon la revendication 1, dans lequel:
la première transmission de liaison montante et la deuxième transmission en liaison montante, basées sur le premier ensemble de ressources SRS et le deuxième ensemble de ressources SRS, sont mappées à la pluralité de TO en fonction des deuxièmes informations relatives à un type de mappage.

5. Procédé selon la revendication 4, dans lequel:
les deuxièmes informations comprennent des données indiquant s'il s'agit d'un mappage séquentiel ou d'un mappage cyclique.

6. Procédé selon la revendication 2, dans lequel:
les informations de capacité relatives à un type de transmission simultanée en liaison montante sont transmises à la station de base.

7. Procédé selon la revendication 1, dans lequel:
les troisièmes informations activant la transmission simultanée en liaison montante sont reçues en provenance de la station de base par l'intermédiaire d'au moins l'un parmi la signalisation de gestion des ressources radio, RRC, l'élément de contrôle d'accès au support, MAC-CE ou les DCI.

8. Procédé selon la revendication 2, dans lequel:
la première transmission de liaison montante comprennent un premier canal physique partagé montant, PUSCH, comprenant un premier bloc de transport de liaison montante, TB, et
la deuxième transmission en liaison montante comprend un deuxième PUSCH incluant un deuxième TB de liaison descendante.

9. Procédé selon la revendication 8, dans lequel:
étant donné que le premier TB de liaison montante et le deuxième TB de liaison montante sont identiques:
le premier PUSCH correspond à une première couche, et le deuxième PUSCH correspond à une deuxième couche différente de la première couche.

10. Équipement utilisateur, UE, (100) comprenant:
au moins un émetteur récepteur (106) ; et
au moins un processeur (102) connecté à l'au moins un émetteur-récepteur (106),
dans lequel le processeur (102) est en outre configuré pour:
recevoir, en provenance d'une station de base, d'informations de configuration relatives à une pluralité d'ensembles de ressources de signal de sondage, SRS, la pluralité d'ensembles de ressources SRS comprenant un premier ensemble de ressources SRS et un deuxième ensemble de ressources SRS;
recevoir, en provenance de la station de base, d'informations de commande de liaison descendante, DCI, comprenant un champ indicateur d'ensemble de ressources SRS indiquant une transmission simultanée en liaison montante ou une transmission répétée en liaison montante sur la base de la pluralité d'ensembles de ressources SRS; et
en fonction du champ indicateur de l'ensemble de ressources SRS, effectuer la transmission répétée en liaison montante ou la transmission simultanée en liaison montante,
dans lequel, sur la base de la transmission simultanée en liaison montante indiquée par le champ indicateur d'ensemble de ressources SRS et d'un deuxième type de transmission simultanée en liaison montante indiqué par les premières informations:
chacune des première et deuxième transmissions en liaison montante, basées sur le premier ensemble de ressources SRS, est mappée à une pluralité d'occasions de transmission, TO, et
chacune des première et deuxième transmissions en liaison montante, basées sur le deuxième ensemble de ressources SRS, est mappée à la pluralité de TO,
dans lequel, sur la base de la transmission répétée en liaison montante indiquée par le champ indicateur d'ensemble de ressources SRS:
la troisième transmission en liaison montante, basée sur le premier ensemble de ressources SRS, est effectuée au cours d'une première TO parmi la pluralité de TO, et
la quatrième transmission en liaison montante, basée sur le deuxième ensemble de ressources SRS, est effectuée au cours d'une deuxième TO parmi la pluralité de TO.

11. Station de base (200), comprenant:
au moins un émetteur récepteur (206) ; et
au moins un processeur (202) connecté à l'au moins un émetteur-récepteur (206),
dans lequel le processeur (202) est en outre configuré pour:
transmettre, à un équipement utilisateur, UE, par l'au moins un émetteur récepteur, les informations de configuration relatives à une pluralité d'ensembles de ressources de signal de sondage, SRS, la pluralité d'ensembles de ressources SRS comprenant un premier ensemble de ressources SRS et un deuxième ensemble de ressources SRS;
transmettre, à l'UE par l'au moins un émetteur récepteur; les informations de commande de liaison descendante, DCI, y compris un champ indicateur d'ensemble de ressources SRS indiquant une transmission simultanée en liaison montante ou une transmission répétée en liaison montante sur la base de la pluralité d'ensembles de ressources SRS; et
en fonction du champ indicateur de l'ensemble de ressources SRS, effectuer la transmission répétée en liaison montante ou la transmission simultanée en liaison montante,
dans lequel, sur la base de la réception simultanée en liaison montante indiquée par le champ indicateur d'ensemble de ressources SRS et d'un deuxième type de réception simultanée en liaison montante indiqué par les premières informations:
chacune des première et deuxième réceptions en liaison montante, basées sur le premier ensemble de ressources SRS, est mappée à une pluralité d'occasions de transmission, TO, et
chacune des première et deuxième réceptions en liaison montante, basées sur le deuxième ensemble de ressources SRS, est mappée à la pluralité de TO,
dans lequel, sur la base de la réception répétée en liaison montante indiquée par le champ indicateur d'ensemble de ressources SRS:
la troisième réception en liaison montante, basée sur le premier ensemble de ressources SRS, est effectuée au cours d'une première TO parmi la pluralité de TO, et
la quatrième réception en liaison montante, basée sur le deuxième ensemble de ressources SRS, est effectuée au cours d'une deuxième TO parmi la pluralité de TO.
